(19) **Europäisches Patentamt / European Patent Office / Office européen des brevets**

(11) **EP 3 358 662 B1**

(12) **EUROPEAN PATENT SPECIFICATION**

(45) Date of publication and mention
of the grant of the patent:
**04.11.2020 Bulletin 2020/45**

(51) Int Cl.:
*H01M 4/62* (2006.01)   *C08L 27/16* (2006.01)
*H01M 4/13* (2010.01)   *H01M 4/139* (2010.01)

(21) Application number: **16851148.3**

(22) Date of filing: **13.09.2016**

(86) International application number:
**PCT/JP2016/077008**

(87) International publication number:
**WO 2017/056974 (06.04.2017 Gazette 2017/14)**

(54) **BINDER COMPOSITION, NON-AQUEOUS ELECTROLYTE SECONDARY BATTERY ELECTRODE, AND NON-AQUEOUS ELECTROLYTE SECONDARY BATTERY**

BINDEMITTELZUSAMMENSETZUNG, ELEKTRODE FÜR SEKUNDÄRBATTERIE MIT WASSERFREIEM ELEKTROLYT UND SEKUNDÄRBATTERIE MIT WASSERFREIEM ELEKTROLYT

COMPOSITION DE LIANT, ÉLECTRODE DE PILE RECHARGEABLE À ÉLECTROLYTE NON AQUEUX ET PILE RECHARGEABLE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2015 JP 2015194954**

(43) Date of publication of application:
**08.08.2018 Bulletin 2018/32**

(73) Proprietor: **Kureha Corporation**
**Chuo-ku**
**Tokyo 103-8552 (JP)**

(72) Inventors:
• **KOBAYASHI, Shota**
**Tokyo 103-8552 (JP)**
• **AOKI, Kenta**
**Tokyo 103-8552 (JP)**

• **SATO, Hiroshi**
**Tokyo 103-8552 (JP)**
• **TADA, Yasuhiro**
**Tokyo 103-8552 (JP)**

(74) Representative: **BRP Renaud & Partner mbB**
**Rechtsanwälte Patentanwälte**
**Steuerberater**
**Königstraße 28**
**70173 Stuttgart (DE)**

(56) References cited:
WO-A1-2012/049967   JP-A- H09 320 607
JP-A- H09 320 607   JP-A- 2004 079 327
JP-A- 2005 310 747   JP-A- 2010 525 124
US-A1- 2014 363 726

**Description**

TECHNICAL FIELD

The present invention relates to a binder composition, electrode for a non-aqueous electrolyte secondary battery, and a non-aqueous electrolyte secondary battery.

BACKGROUND ART

In recent years, development of electronic technology has been remarkable, and high functionality of compact portable apparatuses have been advancing. Therefore, there is demand for power supplies used therein to be smaller and lighter (in other words, higher energy density). Non-aqueous electrolyte secondary batteries such as lithium-ion secondary batteries are widely used as batteries having high energy density.

An electrode structure for a non-aqueous electrolyte secondary battery is a structure having a current collector and an electrode mixture layer formed on the current collector. The electrode mixture layer is generally coated on the current collector in a slurry condition where an electrode mixture containing electrode active materials and binders dispersed in an appropriate solvent or dispersing medium, and is formed by volatilizing the solvent or dispersing medium. Electrode active materials or the like serving as cathode or anode active materials are mainly used as electrode active materials for example. A polyvinylidene fluoride or the like is mainly used as the binder.

However, a conventional polyvinylidene fluoride used as a binder has relatively weak adhesion between electrode active materials and current collector, and therefore, phenomena are observed such as the electrode active material shedding during use, the electrode mixture layer peeling from the current collector, and the like. Therefore, the discharge capacity when using a battery over a long period of time may greatly be reduced.

Therefore, several polyvinylidene fluoride serving as a binder with improved adhesion have been developed. A copolymer of acrylic acid and vinylidene fluoride is known as an example of polyvinylidene fluoride (Patent Literature 1). Furthermore, a technique of improving the adhesion of the binder by blending two or more types of a polyvinylidene fluoride is also known (Patent Literature 2). Patent Literature 2 discloses a binder for forming a non-aqueous battery electrode formed by combining a non-modified polyvinylidene fluoride with an inherent viscosity of 1.2 dL/g or higher, and a modified polyvinylidene fluoride having a carboxyl group or epoxy group. For a separator for non-aqueous secondary battery, a technique of ensuring adhesion to electrodes and good ion permeability and handling properties is known, which separator comprising a porous substrate and an adhesive layer, the adhesive layer is the aggregate layer of particles that contain a polyvinylidene fluoride resin (Patent Literature 3). Patent Literature 3 discloses that the adhesive layer was formed using the mixture of a water-based emulsion of a vinylidene fluoride/acrylic acid copolymer and a water-based emulsion of polyvinylidene.

CITATION LIST

Patent Literature

[Patent Literature 1] Japanese Unexamined Patent Application "PCT Application 2010-525124 (Published July 22, 2010)"

[Patent Literature 2] Japanese Unexamined Patent Application Publication No. "JP H9-320607 A (Published Dec. 12, 1997)"

[Patent Literature 3] US Patent Application Publication No. "US2014/263726 A1 (Published Dec. 11, 2014)"

SUMMARY OF INVENTION

Technical Problem

However, the binders of Patent Literatures 1 and 2 still have a problem in which sufficient adhesion is not provided. Furthermore, Patent Literature 1 describes blending two or more types of polyvinylidene fluoride containing a copolymer according to Patent Literature 1, but does not describe a specific mixture formulation.

Furthermore, the copolymer of acrylic acid and vinylidene fluoride according to Patent Literature 1 has problems where a copolymer or an aggregate of a copolymer and electrode active materials is formed on an electrode surface when preparing an electrode, causing a reduction in battery properties. The separator of Patent Literature 3 is a different use from a binder.

In view of the foregoing, an object of the present invention is to provide a binder composition having high adhesion, without producing a copolymer or an aggregate of a copolymer and electrode active materials.

Solution to Problem

As a result of extensive studies on a configuration of a binder composition, the present inventors discovered that high adhesion can be achieved while suppressing the occurrences of an aggregate of a copolymer, by blending or combining an olivine type lithium compound electrode active material and a polyvinylidene fluoride having an inherent viscosity at a certain value or higher and polyvinylidene fluoride containing acrylic acid or methacrylic acid as a monomer unit, as a component of the binder composition. In other words, the present invention is expressed according to appended independent claim 1.

Advantageous Effects of Invention

The present invention can provide a binder composition having high adhesion, without producing a copolymer or an aggregate of a copolymer and olivine type lithium compound electrode active materials. Furthermore, an effect is achieved where the discharge capacity can be prevented from greatly being reduced, caused by peeling of an electrode mixture layer from an aggregate during battery use, based on high adhesion between the current collector and an electrode mixture layer with an olivine type lithium compound electrode active material.

Brief Description of the Drawings

FIG. 1 is a cross-sectional view of an electrode in a non-aqueous electrolyte secondary battery according to the present embodiment.
FIG. 2 is an exploded perspective view of the non-aqueous electrolyte secondary battery according to the present embodiment.
FIGS. 3A and 3B are views of images illustrating a surface of an electrode manufactured in the present examples, where FIG. 3A illustrates an electrode surface for Example 3, and FIG. 3B illustrates an electrode surface for Comparative Example 10.

Description of Embodiments

An embodiment of the present invention is described in detail below. Herein, unless otherwise specified, "electrode" in the present specification and the like refers to an electrode of a non-aqueous electrolyte secondary battery, where an electrode mixture layer formed from an electrode mixture used in a binder composition in the present embodiment is formed on a current collector. Furthermore, "battery" in the present specification and the like refers to a non-aqueous electrolyte secondary battery provided with the "electrode". Furthermore, "adhesion" in the present specification and the like refers to adhesion between the current collector and electrode mixture layer formed on the current collector, and can be expressed by the peel strength of the electrode mixture layer. In other words, as the peel strength of the electrode mixture layer increases, the "adhesion" can be said to be more favorable.

Binder Composition

A binder composition according to the present embodiment is used for binding olivine type lithium compound electrode active materials to a current collector, on an electrode provided by a battery, formed by forming an electrode mixture layer containing the electrode active materials on the current collector. Two types of a vinylidene fluoride polymer are included in the binder composition. For the sake of convenience, in the present specification and the like, the two types are referred to as a "first vinylidene fluoride polymer" and "second vinylidene fluoride polymer". Furthermore, in the present specification and the like, a "mixture of the first vinylidene fluoride polymer and second vinylidene fluoride polymer" is also referred to as "blended material". Note that the binder composition according to the present embodiment may further include another polymer may so long as a desired effect is not inhibited.

The first vinylidene fluoride polymer and second vinylidene fluoride polymer are described below in detail.

First Vinylidene Fluoride Polymer

The first vinylidene fluoride polymer is vinylidene fluoride having an inherent viscosity of 1.7 dL/g or higher.

"Vinylidene fluoride polymer" in the present specification is a homopolymer of vinylidene fluoride (PVDF).

The inherent viscosity of the first vinylidene fluoride polymer is 1.7 dL/g or higher and preferably 2.1 dL/g or higher. When the inherent viscosity is 1.7 dL/g or higher, a high adhesive performance can be achieved.

In other words, the first vinylidene fluoride polymer is particularly preferably a vinylidene fluoride homopolymer, with an inherent viscosity of 2.1 or higher.

The first vinylidene fluoride polymer can be manufactured by a conventionally known manufacturing method for manufacturing a vinylidene fluoride polymer. In other words, so long as the manufacturing method is appropriately set such that the aforementioned inherent viscosity is provided, the manufacturing method is not particularly limited.

Second Vinylidene Fluoride Polymer

The second vinylidene fluoride polymer is a vinylidene fluoride polymer containing (meth)acrylic acid as a monomer unit. The second vinylidene fluoride polymer preferably contains (meth)acrylic acid in addition to vinylidene fluoride as a monomer unit, and other monomer units may be included. Furthermore, monomer units of both acrylic acid and methacrylic acid may be included. Of these, a copolymer of (meth)acrylic acid and vinylidene fluoride is preferable. Of these, a copolymer of acrylic acid and vinylidene fluoride is more preferable. Note that "(meth)acrylic acid" in the present specification refers to either acrylic acid or methacrylic acid.

The inherent viscosity of the second vinylidene fluoride polymer is preferably 1.0 dL/g or higher, and more preferably 1.3 dL/g or higher.

The second vinylidene fluoride polymer is obtained by continuously adding (meth)acrylic acid or an aqueous solution containing (meth)acrylic acid to vinylidene fluoride, and then copolymerizing. While continuing a copolymerization reaction, continuous supplying of the (meth)acrylic acid) or aqueous solution of (meth)acrylic acid is preferably continued. Examples of a copolymerizing method can include suspension polymerization, emulsion polymerization, solution polymerization, and other conventionally known methods. Of these, from the perspective of ease of post-treatment and the like, suspension polymerization of an aqueous system and emulsion polymerization are preferable, and suspension polymerization of an aqueous system is more preferable as the copolymerizing method.

Examples of a suspending agent in suspension polymerization using water as a dispersing medium can include methylcelluloses, methoxylated methylcelluloses, propoxylated methylcelluloses, hydroxyethyl celluloses, hydroxypropyl celluloses, polyvinyl alcohols, polyethylene oxides, gelatins, and the like.

Furthermore, examples of a polymerization initiator can include diisopropyl peroxycarbonate, di-normal propyl peroxydicarbonate, di-normal heptafluoropropyl peroxydicarbonate, isobutyryl peroxide, di(chlorofluoroacyl) peroxide, di(perfluoroacyl) peroxide, and the like.

Furthermore, ethyl acetate, methyl acetate, acetone, ethanol, n-propanol, acetaldehyde, propyl aldehyde ethyl propionate, carbon tetrachloride, or other chain transfer agent can be added to adjust the degree of polymerization of an obtained polymer.

Mixture of First Vinylidene Fluoride Polymer and Second Vinylidene Fluoride Polymer

The binder composition according to the present embodiment is obtained by mixing the first vinylidene fluoride polymer and second vinylidene fluoride polymer. A ratio of a mixing amount of the first vinylidene fluoride polymer and mixing amount of the second vinylidene fluoride polymer of the binder composition is preferably 75:25 to 25:75 by weight ratio, more preferably 70:30 to 30:70, and even more preferably 60:40 to 40:60.

If the ratio of a mixing amount of the first vinylidene fluoride polymer and second vinylidene fluoride polymer in the binder composition is 1:1, the inherent viscosity of the first vinylidene fluoride polymer is more preferably within a range of 2.1 to 3.1 dL/g, and even more preferably within a range of 2.1 dL/g.

Advantages of Binder Composition

The binder composition according to the present embodiment can achieve high adhesion between an electrode mixture layer, which comprises olivine type electrode active material, and current collector, in other words, high peel strength on an electrode having an electrode mixture layer formed from an electrode mixture using the binder composition according to the present embodiment. Furthermore, with an electrode having an electrode mixture layer obtained using the binder composition according to the present invention, an aggregate of a copolymer can be suppressed from occurring on an electrode surface.

Note that in the present specification, "a copolymer or an aggregate of a copolymer and electrode active materials is suppressed from occurring" indicates a case where a manufactured electrode is cut to 2 cm × 2 cm to prepare four pieces, with less than an average of three aggregates with a diameter of 1 mm or more or length of 1 mm or more per piece within the cut electrode surface area, or less than an average of five aggregates with a diameter of 0.5 mm or more or length of 0.5 mm or more per piece.

In the binder composition according to the present embodiment, a hydrogen bond is formed at an interface between the current collector and (meth)acrylic acid included in the second vinylidene fluoride polymer, and therefore, adhesion is assumed to improve, but a principle for the binder composition in the present embodiment achieving the effect is not limited thereto.

Furthermore, when the mixture ratio of the first vinylidene fluoride polymer and second vinylidene fluoride polymer is within a range of 75:25 to 25:75, further improvement of adhesion between the current collector and electrode mixture layer can be achieved on the electrode having the electrode mixture layer formed from the electrode mixture using the binder composition.

Furthermore, when the mixture ratio of the first vinylidene fluoride polymer and second vinylidene fluoride polymer is 1:1, the first vinylidene fluoride polymer with an inherent viscosity within a range of 2.1 to 3.1 dL/g is used, and therefore, adhesion between the current collector and electrode mixture layer, which comprises olivine type lithium compound electrode active material, can be further improved.

Electrode Mixture

The electrode mixture in the present embodiment contains olivine type lithium compound electrode active materials and non-aqueous solvent in the binder composition. The electrode mixture layer is formed by coating the electrode mixture on the current collector to prepare the electrode. The electrode mixture is a slurry, and can be adjusted to a desired viscosity by adjusting the amount of the non-aqueous solvent.

The electrode mixture in the present embodiment is an olivine type lithium compound electrode mixture for a cathode.

Non-aqueous Solvent

The non-aqueous solvent used in the electrode mixture in the present embodiment is not particularly limited so long as the solvent can dissolve the polyvinylidene fluoride. Examples of the non-aqueous solvent include N-methyl-2-pyrrolidone (NMP), dimethylformamide, N,N-dimethyl acetamide, N,N-dimethyl sulfoxide, hexamethyl phosphoramide, dioxane, tetrahydrofuran, tetramethylurea, triethyl phosphate, trimethyl phosphate, acetone, methyl ethyl ketone, tetrahydrofuran, and the like. The non-aqueous solvents may be used independently or use as a mixed solvent mixing two or more types thereof. Of these, the non-aqueous solvent used in the electrode mixture is preferably N-methyl-2-pyrrolidone, N,N,N-dimethylformamide, N-dimethylacetamide, or other organic solvent containing nitrogen, and is more preferably N-methyl-2-pyrrolidone.

When the total amount of the first vinylidene fluoride polymer and second vinylidene fluoride polymer is 100 parts by mass, the amount of the non-aqueous solvent is preferably 400 to 10,000 parts by mass, and more preferably 600 to 5,000 parts by mass. When the amount of the non-aqueous solvent is within the aforementioned range, the solution has an appropriate viscosity, and handling properties are excellent.

Electrode Active Materials

Electrode active materials used in the electrode mixture in the present embodiment are $LiFePO_4$ and other olivine type lithium compounds.

Anode active materials can be a conventional known material including graphite and other carbon materials.

In the present embodiment, electrode active materials are preferably directly added to the blended material. Alternatively, electrode active materials may be first added to the non-aqueous solvent, and then the stirred and mixed product may be added to the blended material.

Conductive Additives

The electrode mixture in the present embodiment may further contain conductive additives, which are added with the objective of improving the conductivity of the electrode mixture layer. Examples of conductive additives can include carbon black, carbon nanotubes, graphite fine powder, graphite fiber, and other carbon materials, nickel, aluminum, and other metal fine powders or metal fibers.

Other Components of Electrode Mixture

The electrode mixture in the present embodiment may contain another component other than the aforementioned components. Examples of another component can include polyvinyl pyrrolidones, other pigment dispersants, and the like.

Electrode for Non-aqueous Electrolyte Secondary Battery

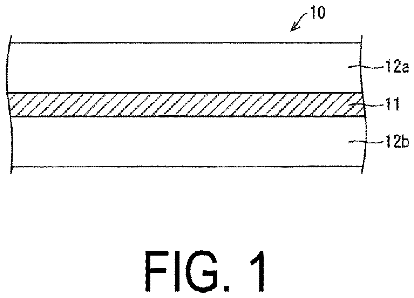

The electrode according to the present embodiment is described below while referring to FIG. 1. FIG. 1 is a cross-sectional view of the electrode of the present embodiment. As illustrated in FIG. 1, an electrode 10 has a current collector 11 and electrode mixture layers 12a and 12b, and the electrode mixture layers 12a and 12b are formed on the current collector 11. As described above, the electrode 10 is a cathode if the electrode mixture layers 12a and 12b are obtained using an electrode mixture for a cathode, and is an anode if the electrode mixture layers 12a and 12b are obtained using an electrode mixture for an anode.

The current collector 11 is a substrate of the electrode 10 and is a terminal for removing electricity. Examples of the material of the current collector 11 can include iron, stainless steel, steel, copper, aluminum, nickel, titanium, and the like. A form of the current collector 11 is preferably a foil or net. If the electrode 10 is a cathode, the current collector 11 is preferably an aluminum foil. The thickness of the current collector 11 is preferably 5 to 100 $\mu$m, and more preferably 5 to 20 $\mu$m. If the electrode 10 is small in size, the thickness of the current collector 11 may be 5 to 20 $\mu$m.

The electrode mixture layers 12a and 12b are layers obtained by coating the aforementioned electrode mixture on the current collector 11 and then drying. A conventionally known method in the technical field can be used as a method of coating the electrode mixture, and examples can include methods using a bar coater, die coater, comma coater, or the like. The drying temperature for forming the electrode mixture layers 12a and 12b is preferably 50 to 170°C. Furthermore, the thickness of the electrode mixture layers 12a and 12b is preferably 10 to 1000 $\mu$m. Note that the electrode 10 in FIG. 1 has the electrode mixture layers 12a and 12b formed on both surfaces of the current collector 11, but is naturally not limited thereto, and the electrode mixture layer may be formed on only one surface of the current collector 11.

The thickness of the electrode mixture layer is normally 20 to 250 $\mu$m, and preferably 20 to 150 $\mu$m. Furthermore, the basis weight of the mixture layer normally is 20 to 700 g/m$^2$, and preferably 30 to 500 g/m$^2$.

Non-aqueous Electrolyte Secondary Battery

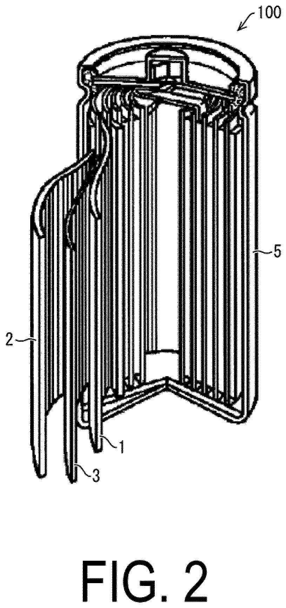

A battery according to the present embodiment is described below while referring to FIG. 2. FIG. 2 is an exploded perspective view of a non-aqueous electrolyte secondary battery. A battery 100 has a cathode 1, anode 2, separator 3, and metal casing 5. Specifically, the battery 100 has a structure where a power generating element with a laminate body disposed on the separator 3 between the cathode 1 and anode 2 wound into a spiral shape is stored in the metal casing 5. Herein, the cathode 1 and anode 2 are the same as the electrode 10 in FIG. 1. A conventional material such as a porous film of polypropylene, polyethylene, or other polymer material or the like can be used for the separator 3.

Note that in FIG. 2, the battery 100 is illustrated as a cylindrical battery, but the battery 100 in the present embodiment is not limited thereto, and may be coin shaped, square shaped, or paper shaped.

Embodiments of the present invention will be described in further detail below using examples. The present invention is not limited to the following examples, and it goes without saying that various aspects are possible with regard to the details thereof. Furthermore, the present invention is not limited to the aforementioned embodiments, and various modifications are possible within the scope indicated in the claims.

Summary

A binder composition according to claim 1 is a binder composition used for binding olivine type lithium compound electrode active materials to a current collector where the electrode active materials are coated, containing: a first vinylidene fluoride polymer with an inherent viscosity of 1.7 dL/g or higher; and a second vinylidene fluoride polymer containing (meth)acrylic acid as a monomer unit.

Furthermore, in the binder composition according to the present invention, the inherent viscosity of the second vinylidene fluoride polymer is preferably 1.0 dL/g or higher.

Furthermore, in the binder composition according to the present invention, the first vinylidene fluoride polymer is a polymer containing only vinylidene fluoride as a monomer unit.

Furthermore, in the binder composition according to the present invention, the inherent viscosity of the first vinylidene fluoride polymer is preferably 2.1 g/dL or higher.

Furthermore, in the binder composition according to the present invention, the mixture ratio of the first vinylidene fluoride polymer and second vinylidene fluoride polymer is preferably 75:25 to 25:75 by weight ratio.

Furthermore, in the binder composition according to the present invention, a non-aqueous solvent and the aforementioned electrode active material is preferably included.

Furthermore, in the binder composition according to the present invention, the electrode active material is preferably a cathode material.

An electrode for a non-aqueous electrolyte secondary battery according to the present invention is an electrode for a non-aqueous electrolyte secondary battery having a current collector and an electrode mixture layer formed on the current collector, and is an electrode for a non-aqueous electrolyte secondary battery where the aforementioned electrode mixture layer is a layer prepared using the aforementioned binder composition.

The non-aqueous electrolyte secondary battery according to the present invention is a non-aqueous electrolyte secondary battery provided with the aforementioned electrode for a non-aqueous electrolyte secondary battery.

Examples

As described below, electrodes were manufactured using various binder compositions according to the present invention, and a peel test was performed using the electrodes. Note that before describing specific examples, a method of calculating an "inherent viscosity" in the present specification will be described below.

Inherent Viscosity $\eta_i$

In order to calculate an inherent viscosity $\eta_i$, 80 mg of a polymer was dissolved in 20 mL of N,N-dimethylformamide to prepare a polymer solution. A viscosity $\eta$ of the polymer solution is measured using an Ubbelohde viscometer in a 30°C constant temperature tank. The inherent viscosity $\eta_i$ is determined by the following equation using the viscosity $\eta$.

$$\eta_i = (1/C) \cdot \ln (\eta/\eta_0)$$

In the equation, $n_0$ represents a viscosity of N,N-dimethylformamide serving as a solvent, and C represents 0.4 g/dL.

Observation on Electrode Surface

Next, a method of observing a surface of the obtained electrode will be described below. A manufactured electrode is cut to 2 cm $\times$ 2 cm, and the number of aggregates with a diameter of 1 mm or more or length of 1 mm or more and aggregates with a diameter of 0.5 mm or more or length of 0.5 mm or more within a cut electrode surface range was observed. The number was determined by visually observing four cut electrode pieces, and calculating the number of present aggregates per piece. With regard to the presence or absence of aggregates, aggregates of copolymers are determined to be present if there are an average of three or more aggregates of vinylidene fluoride with a diameter of 1 mm or more or length of 1 mm or more on the surface of each electrode, or an average of five or more aggregates of vinylidene fluoride with a diameter of 0.5 mm or more or length of 0.5 mm or more on the surface of each electrode.

Example 1

First Vinylidene Fluoride Polymer: Vinylidene Fluoride Homopolymer (PDF) PVDF (KF #1700 manufactured by Kureha Corporation) with an inherent viscosity of 1.7 dL/g was used as the first vinylidene fluoride polymer.

Second Vinylidene Fluoride Polymer: Vinylidene Fluoride/Acrylic Acid Copolymer (VDF/AA Copolymer)

900 g of ion exchanged water, 0.4 g of hydroxypropyl methylcellulose, 2 g of butyl peroxypivalate, 396 g of vinylidene fluoride, and 0.2 g of initially added acrylic acid were incorporated in an autoclave with a 2 L capacity, and then heated to 50°C. A 1 wt.% acrylic acid aqueous solution containing acrylic acid was continuously supplied to a reaction container in a condition where constant pressure was maintained during polymerization. The obtained polymer slurry was dewatered and dried, and thus a VDF/AA copolymer was obtained as the second vinylidene fluoride polymer. The acrylic acid was added at a total amount of 4 g including the initially added amount. The inherent viscosity of the obtained VDF/AA copolymer was 2.5 dL/g.

Manufacturing of Electrode Mixture

PVDF was dissolved in N-methyl-2 pyrrolidone (hereinafter, NMP) to prepare a 5 wt.% concentration vinylidene fluoride polymer solution. A 5 wt.% concentration solution of the VDF/AA copolymer was also prepared by a similar method.

The two obtained solutions were mixed such that a mixture ratio of the PVDF and VDF/AA copolymer was a ratio of 50:50, stirred at 25°C, and then homogenized to prepare a 5 wt.% concentration binder mixed solution.

The 5 wt.% concentration binder mixed solution containing 2 parts by weight of a binder composition with regard to 100 parts by weight of LFP (LFP; LiFePO$_4$, average particle size: 1.2 $\mu$m, specific surface area: 14.7 m$^2$/g) as an electrode active material is mixed for one minute, and then mixed for five minutes after adding N-methyl-2-pyrrolidone to obtain an electrode mixture where the total solid content concentration of the binder composition and electrode active material is 47 wt.%.

Electrode Manufacturing 1

The obtained electrode mixture is coated by a bar coater on a 15 $\mu$m thick aluminum foil serving as a current collector, primary dried for 30 minutes at 110°C in a nitrogen atmosphere, and then secondary dried for 2 hours at 130°C in a nitrogen atmosphere to prepare an electrode with a dry mixture basis weight of approximately 150 g/m$^2$.

Example 2

An electrode was prepared similarly to Example 1, other than the first vinylidene fluoride polymer was changed to PVDF (KF #7200 manufactured by Kureha Corporation) with an inherent viscosity of 2.1 dL/g.

Example 3

An electrode was prepared similarly to Example 1, other than the first vinylidene fluoride polymer was changed to PVDF (KF #7300 manufactured by Kureha Corporation) with an inherent viscosity of 3.1 dL/g.

Example 4

An electrode was prepared similarly to Example 3, other than the ratio of the PVDF and VDF/AA copolymer was set to 25:75.

Example 5

An electrode was prepared similarly to Example 3, other than the ratio of the PVDF and VDF/AA copolymer was set to 75:25.

Example 6

An electrode was prepared similarly to Example 1, other than the PVDF (KF #4300 manufactured by Kureha Corporation) with an inherent viscosity of 3.1 dL/g was used as the first vinylidene fluoride polymer, the ratio of the PVDF and VDF/AA copolymer was set to 3:2, and 2 parts by weight of carbon black (SP; SuperP (registered trademark) Li manufactured by Timcal Japan, average particle size: 40 nm, specific surface area 60 m$^2$/g) was added to the electrode active material as a conductive additive when preparing the electrode mixture.

Example 7

An electrode was prepared to similarly to Example 6, other than carbon nanotubes (CNT; average diameter: 15 nm, specific surface area: 200 m$^2$/g) were used as a conductive additive in place of SP.

Example 8

An electrode was prepared similarly to Example 3, other than the amount of butyl peroxypivalate and the initial added amount of acrylic acid was changed to 6 g and 0.8 g respectively, when preparing the second vinylidene fluoride polymer. The inherent viscosity of the obtained VDF/AA copolymer was 1.5 dL/g.

Example 9

An electrode was prepared similarly to Example 3, other than the initial added amount of acrylic acid was set to 0.8 g when preparing the second vinylidene fluoride polymer. The inherent viscosity of the VDF/AA copolymer obtained at this time was 3.0 dL/g.

Comparative Example 1

An electrode was prepared similarly to Example 1, other than the first vinylidene fluoride polymer was changed to PVDF (KF #1100 manufactured by Kureha Corporation) with an inherent viscosity of 1.1 dL/g.

Comparative Example 2

An electrode was prepared similarly to Example 1, other than only the PVDF (KF #7300 manufactured by Kureha Corporation) with an inherent viscosity of 3.1 dL/g was used without using the second vinylidene fluoride polymer, and 2 parts by weight of SP was added to the electrode active material as a conductive additive when preparing the electrode mixture.

Comparative Example 3

An electrode was prepared similarly to Example 1, other than only the VDF/AA copolymer was used without using the first vinylidene fluoride polymer, and 2 parts by weight of SP was added to the electrode active material as a conductive additive when preparing the electrode mixture.

Comparative Example 4

An electrode was prepared similary to Comparative Example 2, other than CNT was used in place of SP as a conductive additive.

Comparative Example 5

An electrode was prepared similary to Comparative Example 3, other than CNT was used in place of SP as a conductive additive.

Comparative Example 6

An electrode was prepared similarly to Example 3, other than the VDF/AA copolymer was replaced by a vinylidene fluoride polymer containing a carboxyl group with an inherent viscosity of 2.1 dL/g.
For the vinylidene fluoride polymer containing a carboxyl group, 1040 g of ion exchanged water, 0.8 g of methylcellulose, 2 g of diisopropyl peroxydicarbonate, 396 g of vinylidene fluoride, and 4 g of a maleic acid monomethyl ester (vinylidene fluoride: maleic acid monoethyl ester = 100:1.01) were added to an autoclave with a 2 liter capacity, and then suspension polymerized at 28°C. After polymerization is completed, the polymer slurry is dewatered, the dewatered polymer slurry is washed with water, the polymer slurry is dewatered again and then dried for 20 hours for 80°C to obtain a vinylidene fluoride polymer containing a carboxyl group.

Comparative Example 7

An electrode was prepared similarly to Example 1, other than using only PVDF (KF #1700 manufactured by Kureha Corporation) with an inherent viscosity of 1.7 dL/g, and not using the second vinylidene fluoride polymer, and then the peel strength was measured.

Comparative Example 8

An electrode was prepared similarly to Example 1, other than using only PVDF (KF #7200 manufactured by Kureha Corporation) with an inherent viscosity of 2.1 dL/g, and not using the second vinylidene fluoride polymer.

Comparative Example 9

An electrode was prepared similarly to Example 1, other than using only PVDF (KF #7300 manufactured by Kureha Corporation) with an inherent viscosity of 3.1 dL/g, and not using the second vinylidene fluoride polymer.

Comparative Example 10

An electrode was prepared similarly to Example 1, other than using only the VDF/AA copolymer with an inherent viscosity of 2.5 dL/g, and not using the first vinylidene fluoride polymer.

Comparative Example 11

An electrode was prepared similarly to Example 1, other than using only the VDF/AA copolymer with an inherent viscosity of 1.5 dL/g prepared in Example 8 without using the first vinylidene fluoride polymer.

Comparative Example 12

An electrode was prepared similarly to Example 1, other than using only the VDF/AA copolymer with an inherent viscosity of 3.0 dL/g prepared in Example 9 without using the first vinylidene fluoride polymer.

Evaluation of Adhesion of Electrode Mixture Layer on Electrode Structure and Generation of Aggregates 1

Adhesion between the electrode mixture layer and aluminum foil on the electrodes obtained in Examples 1 to 7 and Comparative Examples 1 to 6 was evaluated as 90° peel strength at a head speed of 10 mm/minute by adhering an upper surface of the electrode formed by coating onto a thick plastic plate, and using a tensile testing machine ("STA-1150 UNIVERSAL TESTING MACHINE" manufactured by ORIENTEC) in accordance with JIS K6854-1. The thick plastic plate is made from an acrylic resin and is 5 mm thick. The peel strength of the Examples and Comparative Examples were measured. Furthermore, the generation of aggregates in the electrode mixture layer of the Examples and Comparative Examples were observed. The results are shown in Table 1.

Furthermore, in order to calculate a peel strength calculated value, the peel strength was measured similarly to Comparative Examples 7 to 12. Herein, the peel strength calculated value is a value of peel strength theoretically predicted when mixing the first vinylidene fluoride polymer and second vinylidene fluoride polymer, obtained by adding a value where a value of peel strength when the first vinylidene fluoride polymer and second vinylidene fluoride polymer are independently used is calculated based on the mixed amounts thereof. In other words, a value that is higher than the peel strength calculated value indicates that a synergistic effect occurs by mixing the two types of vinylidene fluoride polymers, as compared to independently using the polymers. The peel strength in Comparative Examples 7, 8, 9, 10, 11, and 12 was 0.19 gf/mm, 0.19 gf/mm, 0.17 gf/mm, 1.28 gf/mm, 0.54 gf/mm, and 0.91 gf/mm.

Table 1

| | Additive | First Vinylidene Fluoride Polymer | | Second Vinylidene Fluoride Polymer | | Peel Strength [gf/mm] | Peel Strength Calculated Value [gf/mm] | Aggregate |
|---|---|---|---|---|---|---|---|---|
| | | Inherent Viscosity [dl/g] | Mixed amount [wt%] | Inherent Viscosity [dl/g] | Mixed amount [wt%] | | | |
| Example 1 | - | 1.7 | 50 | 2.5 | 50 | 1.35 | 0.73 | No |
| Example 2 | - | 2.1 | 50 | 2.5 | 50 | 1.71 | 0.74 | No |
| Example 3 | - | 3.1 | 50 | 2.5 | 50 | 1.46 | 0.73 | No |
| Example 4 | - | 3.1 | 25 | 2.5 | 75 | 0.62 | 0.45 | No |
| Example 5 | - | 3.1 | 75 | 2.5 | 25 | 1.26 | 1.00 | No |
| Comparative example 1 | - | 1.1 | 50 | 2.5 | 50 | 0.58 | 0.73 | No |
| Comparative example 6 | - | 3.1 | 50 | 2.1 | 50 | 0.85 | 0.97 | No |

(continued)

| | Additive | First Vinylidene Fluoride Polymer | | Second Vinylidene Fluoride Polymer | | Peel Strength | Peel Strength Calculated Value | Aggregate |
| --- | --- | --- | --- | --- | --- | --- | --- | --- |
| | | Inherent Viscosity [dl/g] | Mixed amount [wt%] | Inherent Viscosity [dl/g] | Mixed amount [wt%] | [gf/mm] | [gf/mm] | |
| Example 6 | SP | 3.1 | 60 | 2.5 | 40 | 1.98 | 0.60 | No |
| Comparative example 2 | SP | 3.1 | 100 | - | - | 0.20 | - | No |
| Comparative example 3 | SP | - | - | 2.5 | 100 | 1.19 | - | Yes |
| Example 7 | CNT | 3.1 | 60 | 2.5 | 40 | 2.38 | 0.74 | No |
| Comparative example 4 | CNT | 3.1 | 100 | - | - | 0.00 | - | No |
| Comparative example 5 | CNT | - | - | 2.5 | 100 | 1.86 | - | Yes |
| Example 8 | - | 3.1 | 50 | 1.5 | 50 | 1.63 | 0.36 | No |
| Example 9 | - | 3.1 | 50 | 3.0 | 50 | 1.29 | 0.54 | No |

As shown in Table 1, Examples 1 to 5 demonstrated high peel strength as compared to Comparative Example 1 in conjunction with demonstrating higher peel strength than the peel strength calculated value. In particular, Example 2 demonstrated a peel strength of approximately 2.9 time that of Comparative Example 2. The peel strength in Comparative Example 1 is lower than the peel strength calculated value, and an effect of improving the peeling strength by mixing was not observed. Of these, Examples 1 to 3 demonstrated higher peel strength than when the vinylidene fluoride polymers are independently used.

For Examples 6 and 7 using a conductive additive, a higher peel strength than the peel strength calculated value was demonstrated, and a higher peeling strength than when the vinylidene fluoride polymers were independently used was demonstrated.

Comparative Example 6 using a vinylidene fluoride polymer containing a carboxyl group as the second vinylidene fluoride polymer is different from Example 3 where only the type of the second vinylidene fluoride polymer is different, and an effect of improving the peel strength by mixing was not improved.

Furthermore, in Examples 8 and 9 using vinylidene fluoride polymers with inherent viscosities of 1.5 dL/g and 3.0 dL/g as the second vinylidene fluoride polymer, a higher peel strength than the peel strength calculated value was demonstrated even with different inherent viscosities, and a higher peel strength than when independently using the vinylidene fluoride polymers was demonstrated.

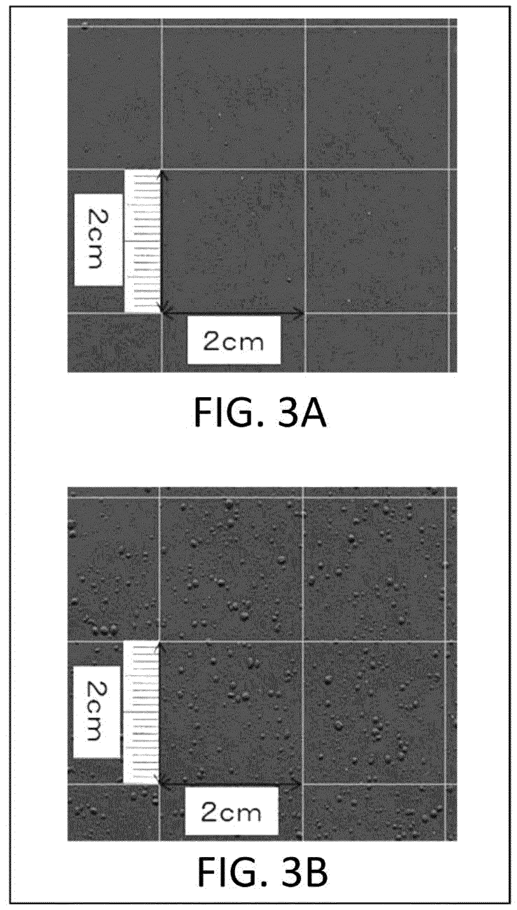

Furthermore, the occurrence of aggregates was not observed in any of the Examples. Of these, as a representation, FIG. 3A and FIG. 3A respectively illustrate a photograph of an electrode surface of Example 3 and a photograph of an electrode surface of Comparative Example 10. As illustrated in FIG. 3B, aggregates were confirmed on the electrode surface of Comparative Example 10, and a copolymer of aggregates of a copolymer and electrode active material occurred. On the other hand, as illustrated in FIG. 3A, the presence of a copolymer or aggregates of a copolymer and electrode active materials could not be confirmed in Example 3.

Electrode Manufacture 2

Reference Example 10 (not according to the invention)

An electrode was prepared similarly to Example 6, other than a lithium-nickel-cobalt-manganese composite oxide (NCM111; $Li_{1.00}Ni_{0.33}Co_{0.33}Mn_{0.33}O_2$, Average particle size: 6 $\mu$m) was used as the electrode active material.

Comparative Example 13

An electrode was prepared similarly to Comparative Example 2, other than NCM111

$(Li_{1.00}Ni_{0.33}Co_{0.33}Mn_{0.33}O_2$, Average particle size: 6 $\mu$m) was used as the electrode active material.

Comparative Example 14

An electrode was prepared similarly to Comparative Example 3, other than NCM111 $(Li_{1.00}Ni_{0.33}Co_{0.33}Mn_{0.33}O_2$, Average particle size: 6 $\mu$m) was used as the electrode active material.

Reference Example 11 (not according to the invention)

An electrode was prepared similarly to Example 6, other than a lithium-cobalt composite oxide (LCO; $LiCoO_2$, Cell seed C5H manufactured by Nippon Chemical Industrial Co., Ltd., Average particle size: 5 $\mu$m) was used as the electrode active material.

Comparative Example 15

An electrode was prepared similarly to Comparative Example 2, other than LCO ($LiCoO_2$, Cell seed C5H manufactured by Nippon Chemical Industrial Co., Ltd., Average particle size: 5 $\mu$m) was used as the electrode active material.

Comparative Example 16

An electrode was prepared similarly to Comparative Example 3, other than LCO ($LiCoO_2$, Cell seed C5H manufactured by Nippon Chemical Industrial Co., Ltd., Average particle size: 5 $\mu$m) was used as the electrode active material. Evaluation of Adhesion of Electrode Mixture Layer on Electrode Structure and Generation of Aggregates 2
Similar to the aforementioned "Evaluation of Adhesion of Electrode Mixture Layer On Electrode Structure and Generation of Aggregates 1", the peel strength of Reference Examples 10 and 11 and Comparative Examples 13 to 16 were measured. Furthermore, the generation of aggregates in the electrode mixture layer were observed. The results are shown in Table 2.

[Table 2]

| | Cathode Active Material | First Vinylidene Fluoride Polymer | | Second Vinylidene Fluoride Polymer | | Peel Strength | Peel Strength Calculated Value | Aggregate |
|---|---|---|---|---|---|---|---|---|
| | | Inherent Viscosity [dl/g] | Mixed amount [wt%] | Inherent Viscosity [dl/g] | Mixed amount [wt%] | [gf/mm] | [gf/mm] | |
| Example 10 | NCM111 | 3.1 | 60 | 2.5 | 40 | 0.82 | 0.53 | No |
| Comparative example 13 | NCM111 | 3.1 | 100 | - | - | 0.31 | - | No |
| Comparative example 14 | NCM111 | - | - | 2.5 | 100 | 0.86 | - | Yes |
| Example 11 | LCO | 3.1 | 60 | 2.5 | 40 | 0.90 | 0.58 | No |
| Comparative example 15 | LCO | 3.1 | 100 | - | - | 0.34 | - | No |
| Comparative example 16 | LCO | - | - | 2.5 | 100 | 0.82 | - | Yes |

EP 3 358 662 B1

As shown in Table 2, both Reference Examples 10 and 11 demonstrated a higher peel strength than the peel strength calculated value.

Industrial Applicability

The present invention can be used as a binder composition used in binding an olivine type lithium compound electrode active material and current collector in a non-aqueous electrolyte secondary battery.

Reference Signs List

1 Cathode
2 Anode
3 Separator
5 Metal casing
10 Electrode
11 Current collector
12a Electrode mixture layer
12b Electrode mixture layer
100 Battery

**Claims**

1.  A binder composition used for binding an electrode active material to a current collector where the electrode active material is coated, the binder composition comprising: an electrolyte active material and
    a first vinylidene fluoride polymer containing only vinylidene fluoride as a monomer unit, the vinylidene fluoride polymer having an inherent viscosity $\eta_i$ of 1.7 dL/g or higher; and
    a second vinylidene fluoride polymer containing acrylic acid or methacrylic acid as a monomer unit;
    wherein the inherent viscosity $\eta_i$ is determined by following equation:

$$\eta_i = (1/C) \cdot \ln (\eta/\eta_0),$$

    wherein $\eta$ represents a viscosity of a polymer solution of 80 mg of the polymer being dissolved in 20 mL of N,N-dimethylformamide, $\eta_0$ represents a viscosity of N,N-dimethylformamide serving as a solvent, and C represents 0.4 g/dL, **characterized in that** the electrode active material is an olivine type lithium compound.

2.  The binder composition according to claim 1, wherein the inherent viscosity of the second vinylidene fluoride polymer is 1.0 dL/g or higher.

3.  The binder composition according to any one of claims 1 or 2, wherein the inherent viscosity of the first vinylidene fluoride polymer is 2.1 dL/g or higher.

4.  The binder composition according to any one of claims 1 to 3, wherein a mixture ratio of the first vinylidene fluoride polymer and second vinylidene fluoride polymer is 75:25 to 25:75 by weight ratio.

5.  The binder composition according to any one of claims 1 to 4, comprising: a non-aqueous solvent.

6.  An electrode for a non-aqueous electrolyte secondary battery, comprising:

    a current collector; and
    an electrode mixture layer formed on the current collector; wherein
    the electrode mixture layer is a layer prepared using the binder composition according to any one of claims 1 to 5.

7.  A non-aqueous electrolyte secondary battery, comprising the non-aqueous electrolyte secondary battery according to claim 6.

**Patentansprüche**

1. Bindemittelzusammensetzung zur Bindung eines elektrodenaktiven Materials an einen Stromabnehmer, wobei das elektrodenaktive Material beschichtet ist, wobei die Bindemittelzusammensetzung umfasst:

   ein elektrolytaktives Material und
   ein erstes Vinylidenfluoridpolymer, das nur Vinylidenfluorid als eine Monomereinheit enthält, wobei das Vinyli-denfluoridpolymer eine Viskosität $\eta_i$ von 1,7 dl/g oder mehr aufweist; und
   ein zweites Vinylidenfluoridpolymer, das Acrylsäure oder Methacrylsäure als eine Monomereinheit enthält;
   wobei die inhärente Viskosität $\eta_i$ durch folgende Gleichung ermittelt wird:

   $$\eta_i = (1/C) \cdot \ln (\eta/\eta_0),$$

   wobei $\eta$ eine Viskosität einer Polymerlösung darstellt, bei der 80 mg des Polymers in 20 ml N,N-Dimethylforma-mid aufgelöst sind, $n_0$ eine Viskosität von N,N- Dimethylformamid darstellt, das als Lösungsmittel dient, und C 0.4 g/dl darstellt, **dadurch gekennzeichnet, dass** das elektrodenaktive Material eine olivinartige Lithiumverbindung ist.

2. Bindemittelzusammensetzung nach Anspruch 1, wobei die inhärente Viskosität des zweiten Vinylidenfluoridpolymers 1,0 dl/g oder höher beträgt.

3. Bindemittelzusammensetzung nach einem der Ansprüche 1 oder 2, wobei die inhärente Viskosität des ersten Vinylidenfluoridpolymers 2,1 dl/g oder höher beträgt.

4. Bindemittelzusammensetzung nach einem der Ansprüche 1 bis 3, wobei ein Mischungsverhältnis von dem ersten Vinylidenfluoridpolymer zum zweiten Vinylidenfluoridpolymer 75:25 bis 25:75 nach Gewichtsverhältnis beträgt.

5. Bindemittelzusammensetzung nach einem der Ansprüche 1 bis 4, umfassend: ein wasserfreies Lösungsmittel.

6. Elektrode für eine Sekundärbatterie mit wasserfreiem Elektrolyt, umfassend:

   einen Stromabnehmer; und
   eine Elektrodenmischungsschicht, die auf dem Stromabnehmer ausgebildet ist; wobei
   die Elektrodenmischungsschicht eine Schicht ist, die unter Verwendung der Bindemittelzusammensetzung nach einem der Ansprüche 1 bis 5 hergestellt wird.

7. Sekundärbatterie mit wasserfreiem Elektrolyt, umfassend die Sekundärbatterie mit wasserfreiem Elektrolyt nach Anspruch 6.

**Revendications**

1. Composition de liant utilisée pour la liaison d'un matériau actif d'électrode à un collecteur de courant où le matériau actif d'électrode est revêtu, la composition de liant comprenant :

   un matériau actif d'électrolyte et
   un premier polymère de fluorure de vinylidène contenant uniquement du fluorure de vinylidène en guise de motif monomère, le polymère de fluorure de vinylidène ayant une viscosité inhérente $\eta_i$ de 1,7 dL/g ou plus élevée ; et
   un deuxième polymère de fluorure de vinylidène contenant de l'acide acrylique ou de l'acide méthacrylique en guise de motif monomère ;
   dans laquelle la viscosité inhérente $\eta_i$ est déterminée par l'équation suivante :

$$\eta_i = (1/C) \cdot \ln (\eta/\eta_0),$$

dans laquelle $\eta$ représente une viscosité d'une solution de polymère de 80 mg du polymère étant dissous dans 20 mL de N,N-diméthylformamide, $\eta_0$ représente une viscosité de N,N- diméthylformamide servant de solvant, et C représente 0,4 g/dL, **caractérisée en ce que** le matériau actif d'électrode est un composé de lithium de type olivine.

2. Composition de liant selon la revendication 1, dans laquelle la viscosité inhérente du deuxième polymère de fluorure de vinylidène est de 1,0 dL/g ou plus élevée.

3. Composition de liant selon l'une quelconque des revendications 1 ou 2, dans laquelle la viscosité inhérente du premier polymère de fluorure de vinylidène est de 2,1 dL/g ou plus élevée.

4. Composition de liant selon l'une quelconque des revendications 1 à 3, dans laquelle un rapport de mélange du premier polymère de fluorure de vinylidène et du deuxième polymère de fluorure de vinylidène est un rapport en poids de 75:25 à 25:75.

5. Composition de liant selon l'une quelconque des revendications 1 à 4, comprenant : un solvant non aqueux.

6. Électrode pour une batterie secondaire à électrolyte non aqueux, comprenant :

   un collecteur de courant ; et
   une couche de mélange d'électrode formée sur le collecteur de courant ; dans laquelle
   la couche de mélange d'électrode est une couche préparée en utilisant la composition de liant selon l'une quelconque des revendications 1 à 5.

7. Batterie secondaire à électrolyte non aqueux, comprenant la batterie secondaire à électrolyte non aqueux selon la revendication 6.

FIG. 1

# FIG. 2

FIG. 3A

FIG. 3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010525124 W
- JP H9320607 A

- US 2014263726 A1